# EUROPÄISCHE PATENTSCHRIFT

(11) **EP 1 101 398 B1**
(45) Veröffentlichungstag und Bekanntmachung des Hinweises auf die Patenterteilung: **28.07.2004**
(21) Anmeldenummer: 00124772.5
(22) Anmeldetag: 14.11.2000
(51) Int. Cl.: A01D 75/18

(54) **Vorrichtung zur Arretierung einer Ernteguttransporteinrichtung**
Device for stopping the transport arrangement of agricultural crop
Dispositif d'arrêt pour l'arrangement de transport de produit de récolte

(30) Priorität: 20.11.1999 DE 19955901
(43) Veröffentlichungstag der Anmeldung: 23.05.2001
(73) Patentinhaber: DEERE & COMPANY, Moline, Illinois 61265-8098 (US)
(72) Erfinder: Bohrer, Stefan, 66606 St. Wendel (DE); Weissig, Jörg, 66121 Saarbrücken (DE)
(74) Vertreter: Holst, Sönke, Dr.

(56) Entgegenhaltungen:
- EP-A- 0 821 871
- DE-A- 19 742 060
- US-A- 4 296 591
- DATABASE WPI Section PQ, Week 199048 Derwent Publications Ltd., London, GB; Class P12, AN 1990-359982 XP002157574 & SU 1 556 575 A (AGRIC MECH RES), 7. April 1990 (1990-04-07)

## Beschreibung

Die Erfindung betrifft eine Vorrichtung zur Arretierung einer Ernteguttransporteinrichtung einer Erntemaschine, mit einem bewegbaren Sperrelement, das eingerichtet ist, eine erste Position, in der die Ernteguttransporteinrichtung arretiert ist, und eine zweite Position, in der die Ernteguttransporteinrichtung bewegbar ist, einzunehmen, und mit einer Einrichtung zur Bewegung des Sperrelements, die einen Hydraulikzylinder umfasst, der das Sperrelement in die erste Position verbringt, wenn er mit Druck beaufschlagt wird, wobei der Hydraulikzylinder durch ein Ventil mit einer Quelle für druckbeaufschlagtes Hydrauliköl verbindbar ist und das Ventil mit einem Verstellantrieb zwischen einer ersten Stellung, in der der Hydraulikzylinder mit der Quelle verbunden ist, und einer zweiten Stellung bewegbar ist, in der der Hydraulikzylinder drucklos ist.

Im Stande der Technik werden Feldhäcksler mit Metalldetektoren ausgestattet, die zur Detektion eingedrungener unerwünschter metallischer (insbesondere ferromagnetischer) Gegenstände eingerichtet sind. Wird ein derartiger Gegenstand nachgewiesen, wird durch eine Steuerung eine Sperrklinke ausgelöst, welche eine Einzugswalze arretiert, indem sie in ein mit letzterer drehfest verbundenes unrundes Element, insbesondere ein Nockenrad eingreift. Gleichzeitig wird der Antrieb der Einzugswalzen außer Betrieb gesetzt. Die Sperrklinke wird im Regelfall durch eine mit dem Metalldetektor verbundene Steuerung mittels eines elektromagnetischen Antriebs, in der Regel eines Elektromagneten, von der Sperrposition (im folgenden als erste Position bezeichnet) gegen die Wirkung einer Feder in eine zweite Position verbracht, in der die Einzugswalze drehbar ist. Ein derartiger Feldhäcksler ist beispielsweise aus der EP 0 324 253 A und der DE 2 552 805 A bekannt geworden.

Der elektromagnetische Antrieb ist bei den bekannten Feldhäckslern immer dann aktiviert, wenn ein normaler Arbeitsbetrieb erfolgt, die Sperrklinke also in der zweiten Position ist. Um zu erreichen, daß die Einzugswalze nach Detektion eines metallischen Gegenstandes hinreichend schnell angehalten wird, muß eine entsprechend starke Feder verwendet werden, die die Sperrklinke nach dem Ausschalten des elektromagnetischen Antriebs schnell genug in die erste Position zurück verbringt. Der Elektromagnet muß, um die Kraft der Feder überwinden zu können, hinreichend groß dimensioniert werden und belastet aufgrund der zu seinem Betrieb notwendigen, relativ hohen Stromstärke das Bordnetz der Erntemaschine recht stark. Trotzdem ist es problematisch, hinreichend kurze Zeitintervalle für das Arretieren der Einzugswalze zu erreichen. Außerdem kann aufgrund der (wegen des Strombedarfs) recht gering dimensionierten Haltekraft des Elektromagneten die Sperrklinke auf das Nockenrad fallen, insbesondere wenn die Erntemaschine eine Bodensenke durchfährt, und somit einen unbeabsichtigten Stopp der Einzugswalzen verursachen. Diese Fehlfunktion wird als "False Tripping" bezeichnet.

In der SU 1 556 575 A wird eine Stoppeinrichtung für eine Erntemaschine beschrieben, die ein Zahnrad und eine Klinke umfasst, die mit dem Zahnrad in Eingriff gebracht werden kann. Die Klinke wird durch einen doppelt wirkenden Hydraulikzylinder bewegt, der durch ein elektromagnetisches Ventil gesteuert wird. Das Ventil ist durch eine Feder in eine Position vorgespannt, in der die Klinke sich nicht im Eingriff mit dem Zahnrad befindet, so dass sich die zugehörige Welle frei drehen kann. Bei einem Ausfall des Stromsystems dreht sich die Welle somit weiter, was zu einem unerwünschten Einziehen von Fremdmaterial führen kann.

Das der Erfindung zugrunde liegende Problem wird neben der Problematik des "False Tripping" und dem relativ hohen Strombedarf der bekannten Vorrichtungen zur Arretierung von Ernteguttransporteinrichtungen von Erntemaschinen darin gesehen, daß ihre Abschaltzeiten nicht immer hinreichen, die Häckseltrommel vor Beschädigungen zu schützen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Erfindungsgemäß wird ein Hydraulikzylinder zur Betätigung des Sperrelements verwendet. Der Hydraulikzylinder ist eingerichtet, das Sperrelement zwischen einer ersten Position, in der die Ernteguttransporteinrichtung arretiert ist, und einer zweiten Position, in der sie bewegbar ist, zu bewegen. Da er seine Antriebsenergie aus unter Druck stehendem Hydrauliköl bezieht, belastet er das Bordnetz der Erntemaschine nicht und kann deshalb unproblematisch derart groß dimensioniert werden, daß die Fehlfunktion des "False Tripping" nicht zu befürchten ist. Außerdem sind Hydraulikzylinder mit kleinen Ansprechzeiten verfügbar. Das Sperrelement wird in die erste Position verbracht (und ist in der ersten Position), wenn der Hydraulikzylinder mit Druck beaufschlagt wird (ist). Im Normalbetrieb, d. h. falls das Sperrelement in der zweiten Position ist, ist der Hydraulikzylinder somit drucklos. Der Öldruck wird bei nachgewiesenem Fremdkörper eingeschaltet, so daß das Sperrelement durch den Hydraulikzylinder in kurzer Zeit in die erste Position verbracht wird. Weiterhin wird ein Ventil zur Steuerung des Hydraulikzylinders vorgeschlagen. Es weist zwei Stellungen auf: eine erste Stellung, in der der Hydraulikzylinder mit einer Quelle druckbeaufschlagten Öls verbunden ist, und eine zweite Stellung, in der er drucklos ist. Es erweist sich als zweckmäßig, daß das Ventil bei einem Ausfall der Energiequelle des Verstellantriebs, also beispielsweise bei einem Bordnetzausfall, in der ersten Stellung ist, da dann der Hydraulikzylinder mit Öl beaufschlagt wird und das Sperrelement in die erste Position verbringt.

Obwohl die Einrichtung zur Detektion von Fremdkörpern wegen Ausfalls der Energiequelle nicht betriebsbereit ist, ist eine Beschädigung der Häckseltrommel nicht zu befürchten, da die Ernteguttransporteinrichtung durch das Sperrelement arretiert ist.

Anzumerken ist, daß auch die Verwendung eines doppelt wirkenden Hydraulikzylinders denkbar ist, bei dem in der ersten und zweiten Position des Sperrelements jeweils eine andere Kammer unter Druck steht. Letzterer ist unter Kostengesichtspunkten allerdings nachteilig.

Zur Steuerung des Ventils dient in der Regel ein elektromagnetischer Verstellantrieb, der im Konkreten ein Elektomagnet oder -motor sein kann. Allerdings ist auch eine hydraulische oder beliebige andere Verstellung des Ventils denkbar.

Um das Ventil bei Ausfall der Energiequelle des Verstellantriebs - und auch bei abgeschaltetem Verstellantrieb - in die erste Stellung zu verbringen, ist eine entsprechende Feder vorgeschlagen. Ist der Verstellantrieb des Ventils aktiviert, verbringt er das Ventil entgegen der Wirkung der Feder in die zweite Stellung; anderenfalls verbringt die Feder das Ventil in die erste Stellung. Die Feder erübrigt also auch einen bidirektional wirkenden Verstellantrieb des Ventils.

Findet ein einfach wirkender Hydraulikzylinder Verwendung, erweist sich die Verwendung einer Feder als zweckmäßig, gegen die der Hydraulikzylinder wirkt. Ist letzterer gemäß der oben beschriebenen Ausführungsform der Erfindung derart angeordnet, daß er bei Beaufschlagung mit Druck das Sperrelement in die erste Position bewegt, verbringt die Feder das Sperrelement bei drucklosem Hydraulikzylinder in die zweite Stellung. Die Feder drückt dabei das Öl aus dem Hydraulikzylinder heraus, vorzugsweise in ein Reservoir. Es ist in dieser Ausführungsform wegen der relativ großen mit dem Hydraulikzylinder realisierbaren Kraft unproblematisch, die Feder ebenfalls relativ stark zu dimensionieren, so daß die Fehlerquelle des "False Tripping" eliminiert werden kann.

Als mittels des Sperrelements zu arretierende Ernteguttransporteinrichtung kommt bei Feldhäckslern insbesondere eine Einzugswalze (oder mehrere Einzugswalzen) in Frage. Es wäre auch denkbar, andere Transportelemente, wie die Schnecke einer Pick-up oder bei Mähdreschern den Schrägförderer und/oder die Dreschtrommel mit dem Sperrelement zu arretieren.

Das Sperrelement umfaßt in der Regel eine Sperrklinke, die in Eingriff mit einem Element mit unrundem Querschnitt, insbesondere einem verzahnten Rad oder Nockenrad bringbar ist. Die Sperrklinke ist dazu mit einem in das Rad eingreifenden und es arretierenden Nocken, Zapfen oder dergleichen versehen. Das Rad ist seinerseits (mittelbar oder unmittelbar) drehfest mit der Ernteguttransporteinrichtung verbunden.

Schließlich kann der Hydraulikzylinder (über das Ventil) durch eine Steuerung gesteuert werden, welche mit einem Sensor für aufgenommenes unerwünschtes Material verbunden ist. Ein derartiger Sensor ist insbesondere ein Metalldetektor.

In den Zeichnungen ist ein nachfolgend näher beschriebenes Ausführungsbeispiel der Erfindung dargestellt. Es zeigt:
- Fig. 1: eine Erntemaschine in Seitenansicht und in schematischer Darstellung und
- Fig. 2: eine schematische Seitenansicht einer Einzugs- und Häckselvorrichtung der Erntemaschine der Figur 1.

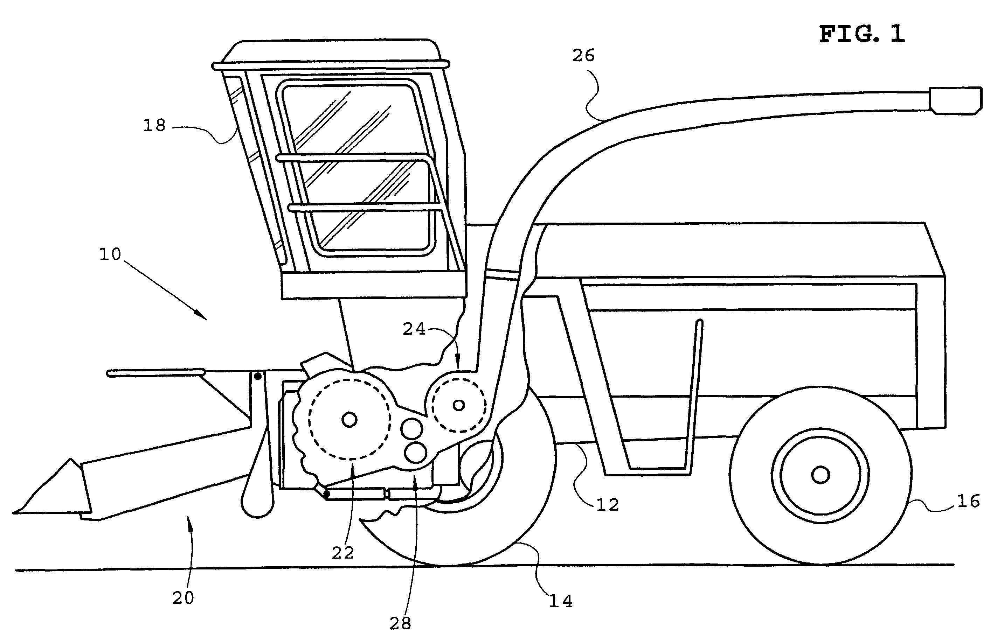

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verläßt die Erntemaschine 10 zu einem nebenher fahrenden Anhänger über einen drehbaren Austragsschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird. Die Lage der Nachzerkleinerungsvorrichtung 28 ist jedoch nicht entscheidend, so daß sie auch stromabwärts der Fördervorrichtung 24 vorgesehen werden kann.

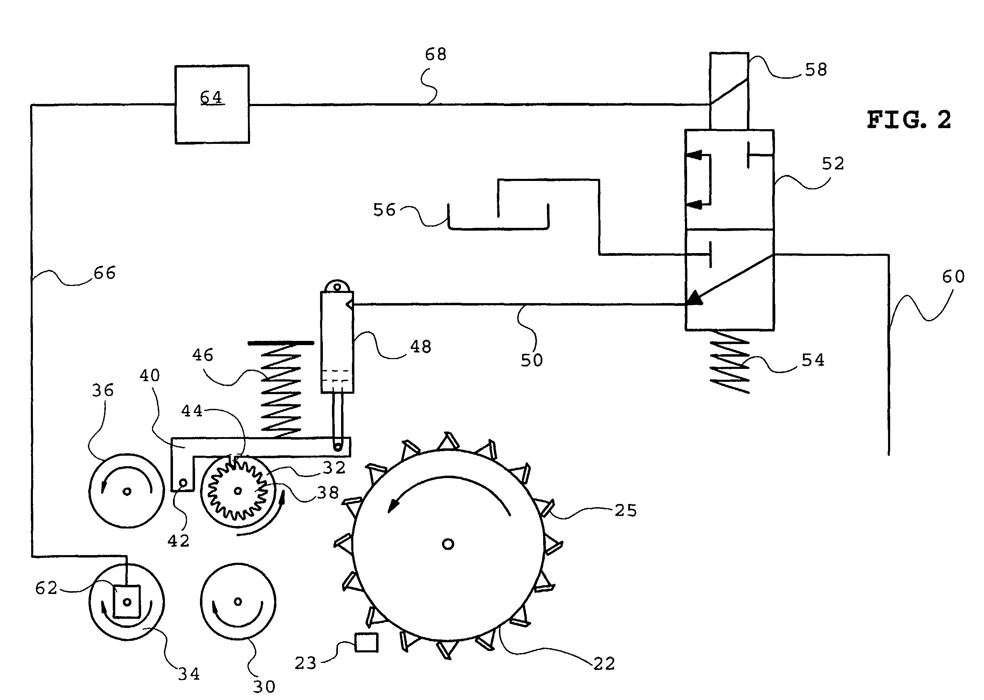

Die Figur 2 gibt die Einzugs- und Häckselvorrichtung der Erntemaschine 10 wieder. Die Einzugsvorrichtung ist bezüglich des Stroms aufgenommenen Ernteguts zwischen der Erntegutaufnahmevorrichtung 20 und der Häckseltrommel 22 angeordnet. Sie besteht in ihrem grundsätzlichen Aufbau aus einem Paar vorderer Einzugswalzen 34, 36 und einem Paar hinterer Einzugswalzen 30, 32. Je eine Walze dieser Paare wirkt mit der jeweils anderen Walze zusammen, um das Erntegut von der Erntegutaufnahmevorrichtung 20 zur Häckseltrommel 22 zu transportieren. Zu diesem Zweck sind entsprechende Antriebsvorrichtungen vorgesehen, die jede der Einzugswalzen 30, 32, 34 und 36 in Rotation versetzen. Die jeweiligen Drehrichtungen sind in Figur 2 durch Pfeile angedeutet. In der Regel sind die oberen Einzugswalzen 32, 36 relativ zu den unteren Einzugswalzen 30, 34 bewegbar angeordnet und werden durch Federkraft gegen letztere gepreßt. Aus Gründen der Übersichtlichkeit, und da sie an sich bekannt sind, wurde die Lagerung der oberen Einzugswalzen 32, 36 und die zur Erzeugung des Anpreßdrucks verwendeten Federn nicht in Figur 2 eingezeichnet.

Als Häckselvorrichtung dient die mit über ihren Umfang verteilten Messern 25 versehene Häckseltrommel 22 im Zusammenwirken mit einer Gegenschneide 23.

Um zu verhindern, daß die Messer 25 der Häckseltrommel 22 durch im Erntegut enthaltene ferromagnetische Fremdkörper beschädigt wird, ist eine Metalldetektionseinrichtung vorgesehen. Die Metalldetektionseinrichtung weist einen Sensor 62 auf, der innerhalb der unteren vorderen Einzugswalze 34 angeordnet ist. Ein derartiger Sensor ist beispielsweise aus der EP 0 324 253 A, der DE 19912407, der DE 2 552 805 A und den dort genannten Referenzen bekannt geworden. Der Sensor 62 ist über eine Leitung 66 mit einer Steuerung 64 verbunden, die ihrerseits eine Vorrichtung zur Arretierung der hinteren oberen Einzugswalze 32 steuert. Falls im Erntegut ein (ferromagnetischer) Metallgegenstand, beispielsweise eine Weißblechdose, enthalten ist, spricht der Sensor 62 an, so daß die Steuerung 64 über die Leitung 66 mit einer entsprechenden Information beaufschlagt und veranlaßt wird, mittels der Vorrichtung zur Arretierung sofort die hintere obere Einzugswalze 32 anzuhalten. Der Metallgegenstand wird deshalb nicht bis zur Häckseltrommel 22 transportiert, so daß letztere nicht beschädigt wird. Gleichzeitig mit der Arretierung der hinteren oberen Einzugswalze 32 bewirkt die Steuerung 64 in an sich bekannter Weise eine Unterbrechung des Antriebs der Einzugswalzen 30, 32, 34 und 36, was vorzugsweise durch Abschalten einer Elektrokupplung geschieht, die sich im Antriebsstrang zwischen den Einzugswalzen 30, 32, 34 und 36 und ihrer Antriebseinrichtung - in der Regel der Hauptmotor der Erntemaschine 10, der über entsprechende Antriebselemente, wie Riemen und/oder Zahnräder die Einzugswalzen 30, 32, 34 und 36 antreibt - befindet. Es wäre auch denkbar, durch die Steuerung 64 einen separaten Elektro- oder Hydraulikmotor, der die Einzugswalzen 30, 32, 34 und 36 antreibt, auszuschalten.

Die Vorrichtung zur Arretierung der hinteren oberen Einzugswalze 32 umfaßt eine Sperrklinke 40, die um einen Drehpunkt 42 drehbar gelagert ist, und die mit einem Nocken 44 versehen ist. Der Nocken 44 ist eingerichtet, in Eingriff mit einem verzahnten Rad 38 zu gelangen, das auf der Drehachse der hinteren oberen Einzugswalze 32 angeordnet und mit letzterer drehfest verbunden ist. Der Drehpunkt 42 ist am Rahmen 12 der Erntemaschine 10 verankert. Befindet sich die Sperrklinke 40 in ihrer ersten (Sperr-) Position, wie in Figur 2 dargestellt, kann sich die hintere obere Einzugswalze 32 nicht drehen; sie ist arretiert. Wird die Sperrklinke 40 mit dem Nocken 44 angehoben und in eine zweite (Nicht-Eingriffs-) Position verbracht, kann die hintere obere Einzugswalze 32 durch die ihr zugeordneten Antriebseinrichtungen in Drehung versetzt werden. Die Position der Sperrklinke 40 mit dem Nocken 44 wird durch einen einfach wirkenden Hydraulikzylinder 48 und eine Feder 46 gesteuert. Die Feder 46 ist derart angeordnet, daß sie die Sperrklinke 40 in die zweite Position verbringt, solange der Hydraulikzylinder 48 nicht mit Druck beaufschlagt ist.

Der Hydraulikzylinder 48 ist durch eine erste Hydraulikölleitung 50 mit einem Ventil 52 verbunden. Das Ventil 52 weist zwei Betriebsstellungen auf. In der in Figur 2 dargestellten ersten Stellung ist durch das Ventil 52 die erste Hydraulikölleitung 50 mit einer zweiten Hydraulikölleitung 60 verbunden, die unter Betriebsdruck steht und (mittelbar oder unmittelbar) mit einem entsprechenden Druckbehälter bzw. einer Hydraulikölpumpe (Ladepumpe oder dergleichen) verbunden ist. Der Hydraulikzylinder 48 ist daher unter Betriebsdruck und verbringt die Sperrklinke 40 mit dem Nocken 44 in die erste Position. In der zweiten Stellung des Ventils 52 ist die zweite Hydraulikölleitung 60 abgesperrt und die erste Hydraulikölleitung 50 mit einem Reservoir 56 verbunden. In der zweiten Stellung des Ventils 52 ist der Hydraulikzylinder 48 somit drucklos und die Feder 46 verbringt die Sperrklinke 40 mit dem Nocken 44 in die zweite Position, so daß sich die hintere obere Einzugswalze 32 drehen kann.

Die Stellung des Ventils 52 wird durch die Steuerung 64 mittels eines elektromagnetischen Verstellantriebs 58, der gegen die Kraft einer Feder 54 agiert, gesteuert. Ist der über eine Leitung 68 mit der Steuerung 64 verbundene Verstellantrieb 58 stromlos, so verbringt die Feder 54 das Ventil 52 in die erste Stellung, so daß die Sperrklinke 40 ihre erste Position einnimmmt. Wird der Verstellantrieb 58 durch die Steuerung 64 mit Strom beaufschlagt, verbringt er das Ventil 52 in die zweite Stellung, so daß der Hydraulikzylinder 48 drucklos wird und die Sperrklinke 40 in die zweite Position kommt. Die Steuerung 64 ist somit eingerichtet, die hintere obere Einzugswalze 32 bei Ansprechen des Sensors 62 zu arretieren. Es ist selbstverständlich auch möglich, zusätzlich oder alternativ zur hinteren oberen Einzugswalze 32 eine beliebige andere der Einzugswalzen 30, 34, 36 (oder mehrere von ihnen) zu arretieren.

Der Vorteil der Verwendung des Hydraulikzylinders 48 liegt in der erzielbaren, relativ kurzen Ansprechzeit. Außerdem ist die elektrische Schaltung der Arretiervorrichtung derart gestaltet, daß bei einem Ausfall der elektrischen Stromversorgung die Sperrklinke 40 selbsttätig in ihre Sperrposition verbracht wird, da das Ventil 52 bei fehlendem Strom durch den Verstellantrieb 58 durch Wirkung der Feder 54 in die erste Stellung verbracht wird, in der der Hydraulikzylinder 48 aktiviert ist.

## Patentansprüche

1. Vorrichtung zur Arretierung einer Ernteguttransporteinrichtung einer Erntemaschine (10), mit einem bewegbaren Sperrelement, das eingerichtet ist, eine erste Position, in der die Ernteguttransporteinrichtung arretiert ist, und eine zweite Position, in der die Ernteguttransporteinrichtung bewegbar ist, einzunehmen, und mit einer Einrichtung zur Bewegung des Sperrelements, die einen Hydraulikzylinder (48) umfasst, der das Sperrelement in die erste Position verbringt, wenn er mit Druck beaufschlagt wird, wobei der Hydraulikzylinder (48) durch ein Ventil (52) mit einer Quelle für druckbeaufschlagtes Hydrauliköl verbindbar ist und das Ventil (52) mit einem Verstellantrieb zwischen einer ersten Stellung, in der der Hydraulikzylinder (48) mit der Quelle verbunden ist, und einer zweiten Stellung bewegbar ist, in der der Hydraulikzylinder (48) drucklos ist, **dadurch gekennzeichnet, daß** das Ventil (52) in der ersten Stellung ist, wenn der Verstellantrieb nicht aktiviert ist.

2. Vorrichtung nach Anspruch 1, **dadurch gekennzeichnet, daß** der Verstellantrieb ein Elektromagnetantrieb (58) ist.

3. Vorrichtung nach Anspruch 1 oder 2, **gekennzeichnet durch** eine Feder (54), die das Ventil (52) bei nicht aktiviertem Verstellantrieb in die erste Stellung verbringt.

4. Vorrichtung nach einem der Ansprüche 1 bis 3, **gekennzeichnet durch** eine Feder (46), gegen die der Hydraulikzylinder (48) wirkt.

5. Vorrichtung nach einem der vorhergehenden Ansprüche, **dadurch gekennzeichnet, daß** die Ernteguttransporteinrichtung eine Einzugswalze (32) umfaßt oder ist.

6. Vorrichtung nach einem der vorhergehenden Ansprüche, **dadurch gekennzeichnet, daß** das Sperrelement eine Sperrklinke (40) umfaßt, die in Eingriff mit einem Element mit unrundem Querschnitt, insbesondere einem verzahnten Rad (38) oder Nockenrad, bringbar ist, das mittelbar oder unmittelbar drehfest mit der Ernteguttransporteinrichtung verbunden ist.

7. Vorrichtung nach einem der vorhergehenden Ansprüche, **gekennzeichnet durch** eine Steuerung (64), die mit einem Sensor (62) für aufgenommenes unerwünschtes Material, insbesondere einem Metalldetektor, verbunden ist, und die zur Steuerung des Hydraulikzylinders (48) eingerichtet ist.

8. Erntemaschine (10), insbesondere Feldhäcksler, mit einer Vorrichtung zur Arretierung der Ernteguttransporteinrichtung nach einem der vorhergehenden Ansprüche.

## Claims

1. Apparatus for stopping a harvested crop transport device of a harvesting machine (10), with a movable blocking element which is arranged to assume a first position, in which the harvested crop transport device is stopped, and a second position, in which the harvested crop transport device can move, and with a device for moving the blocking element, which comprises a hydraulic cylinder (48) which brings the blocking element into the first position when it is subjected to pressure, wherein the hydraulic cylinder (48) can be connected by a valve (52) to a source of pressurised hydraulic oil and the valve (52) can be moved by a positioning driver between a first position in which the hydraulic cylinder (48) is connected to the source and a second position in which the hydraulic cylinder (48) is depressurised, **characterized in that** the valve (52) is in the first position when the positioning driver is not activated.

2. Apparatus according to claim 1, **characterized in that** the positioning driver is an electromagnetic driver (58).

3. Apparatus according to claim 1 or 2, **characterized by** a spring (54) which brings the valve (52) into the first position with the positioning driver not activated.

4. Apparatus according to any of claims 1 to 3, **characterized by** a spring (46) against which the hydraulic cylinder (48) acts.

5. Apparatus according to any of the preceding claims, **characterized in that** the harvested crop transport device comprises or is an infeed roller (32).

6. Apparatus according to any of the preceding claims, **characterized in that** the blocking element comprises a blocking pawl (40) which can be brought into engagement with an element with a non-circular cross-section, especially a toothed wheel (38) or cam wheel, which is connected indirectly or directly rotationally fast with the harvested crop transport device.

7. Apparatus according to any of the preceding claims, **characterized by** a controller (64) which is connected to a sensor (62) for received unwanted material, especially a metal detector, and which is arranged to control the hydraulic cylinder (48).

8. A harvesting machine (10), especially a forage harvester, with an apparatus for stopping the harvested crop transport device according to any of the preceding claims.

## Revendications

1. Dispositif d'arrêt pour l'arrangement de transport d'un produit de récolte d'une moissonneuse (10), avec un élément de blocage mobile qui est arrangé de façon à occuper une première position, dans laquelle l'arrangement de transport d'un produit de récolte est arrêté, et une deuxième position, dans laquelle l'arrangement de transport d'un produit de récolte est mobile, et avec un dispositif pour déplacer l'élément de blocage, qui comprend un cylindre hydraulique (48) qui amène l'élément de blocage dans la première position lorsqu'il est mis sous pression, dans lequel le cylindre hydraulique (48) peut être relié par une vanne (52) à une source d'huile hydraulique sous pression et la vanne (52) peut être déplacée avec une commande de déplacement entre une première position, dans laquelle le cylindre hydraulique (48) est relié à la source, et une deuxième position, dans laquelle le cylindre hydraulique (48) se trouve sans pression, **caractérisé en ce que** la vanne (52) se trouve dans la première position lorsque la commande de déplacement n'est pas activée.

2. Dispositif selon la revendication 1, **caractérisé en ce que** la commande de déplacement est une commande électromagnétique (58).

3. Dispositif selon la revendication 1 ou 2, **caractérisé par** un ressort (54), qui amène la vanne (52) dans la première position lorsque la commande de déplacement n'est pas activée.

4. Dispositif selon l'une quelconque des revendications 1 à 3, **caractérisé par** un ressort (46), contre lequel le cylindre hydraulique (48) agit.

5. Dispositif selon l'une quelconque des revendications précédentes, **caractérisé en ce que** l'arrangement de transport d'un produit de récolte comprend ou est un rouleau d'alimentation (32).

6. Dispositif selon l'une quelconque des revendications précédentes, **caractérisé en ce que** l'élément de blocage comprend un cliquet d'arrêt (40), qui peut être mis en prise avec un élément de section transversale non circulaire, en particulier une roue dentée (38) ou une roue à came, qui est raccordée d'une façon directement ou indirectement bloquée en rotation avec l'arrangement de transport d'un produit de récolte.

7. Dispositif selon l'une quelconque des revendications précédentes, **caractérisé par** une commande (64), qui est reliée à un détecteur (62) de matières indésirables entraînées, en particulier un détecteur de métaux, et qui est arrangée de façon à commander le cylindre hydraulique (48).

8. Moissonneuse (10), en particulier ramasseuse-hacheuse, avec un dispositif d'arrêt pour l'arrangement de transport d'un produit de récolte selon l'une quelconque des revendications précédentes.
